# EUROPÄISCHE PATENTSCHRIFT

(11) **EP 2 175 398 B1**
(45) Veröffentlichungstag und Bekanntmachung des Hinweises auf die Patenterteilung: **14.12.2011**
(21) Anmeldenummer: 08017606.8
(22) Anmeldetag: 08.10.2008
(51) Int. Cl.: G06K 19/06

(54) **Medizinisches Produkt**
Medical product
Produit médical

(43) Veröffentlichungstag der Anmeldung: 14.04.2010
(73) Patentinhaber: Paul Hartmann Aktiengesellschaft, 89522 Heidenheim (DE)
(72) Erfinder: Hofstetter, Jürgen, 89522 Heidenheim (DE); Eckstein, Axel, Dr., 89522 Heidenheim (DE)
(74) Vertreter: Langöhrig, Angelika Beate

(56) Entgegenhaltungen:
- DE-A1- 10 222 569
- US-A- 5 938 727
- US-A- 5 971 277
- US-A1- 2006 095 286
- US-A1- 2006 180 661

## Beschreibung

Die Erfindung betrifft ein medizinisches Produkt mit einer Trägerschicht, wobei eine der beiden oberflächenbildenden Seiten der Trägerschicht eine Außenseite des medizinischen Produktes bildet, wobei auf der Seite, die die Außenseite bildet, eine Kodierung oder Code dauerhaft aufgebracht ist.

Unter medizinischem Produkt sollen hierbei u. a. Windeln, Inkontinenzeinlagen, Krankenunterlagen, aber auch Wundauflagen, Kompressen und Pflaster sowie Binden und Bandagen, insbesondere Kompressions- und Fixierbinden umfasst sein. Daneben sollen unter medizinischem Produkt auch Abdeckungen für Patienten oder Geräte während einer Operation sowie Bekleidungsstücke für den Operateur, wie OP-Kittel, OP-Handschuhe und OP-Hauben verstanden werden.
Schließlich sollen medizinische Produkte auch Arzneimittel umfassen. Allen diesen Produkten ist es gemein, dass sie im Gebrauchsfall aus einer Verpackung, die technische oder anwenderbezogene Informationen in Form eines Beipackzettels oder in Kurzfassung auf der Verpackung selbst enthalten kann, entnommen werden, um dann insbesondere am Körper getragen oder eingenommen zu werden, wie dies beispielsweise bei einer Windel oder auch bei einer Wundauflage oder einem Pflaster sowie einem OP-Mantel der Fall ist, oder um in einem Operationssaal zumindest ohne konkreten weiteren Kontakt zu dem Beipackzettel oder der Verpackung verwendet zu werden. Das Gleiche gilt auch im Wesentlichen für Arzneimittel, die vielfach aus einer Umverpackung entnommen werden, insbesondere für Tabletten, die in sogenannten Blisterstreifen aus den Verpackungen entnommen werden und dann ohne weiteren Kontakt zur Verpackung und zum Beipackzettel mitgeführt oder gelagert werden. Vielfach wird auch zur besseren Verstaubarkeit der Beipackzettel zunächst aus der Umverpackung entfernt und steht dann für weitere Konsultationen nicht mehr zur Verfügung.

Darüber hinaus stellt es ein Problem dar, dass auf den meisten derartigen medizinischen Produkten technische Informationen oder anwenderbezogene Informationen entweder aus Abmessungsoder Platzgründen sowie aus anderen Gründen, die in der Benutzung der Produkte bedingt sind, nicht aufgebracht werden können.

Nichtsdestotrotz kann es zu einem späteren Zeitpunkt, insbesondere auch während oder nach der Benutzung interessant oder notwendig sein, Informationen insbesondere zu Anwendungshinweisen oder Nebenwirkungen zu erhalten.

Ferner ist es von verschiedenen Seiten, beispielsweise von Seiten der vertreibenden Firmen, der Arzneimittelzulassungsbehörden oder von Seiten der Verbraucher gewünscht oder verpflichtend, eine eindeutige Kennzeichnung der medizinischen Produkte vorzunehmen. Auf diese Weise soll eine sichere Identifizierung des Produkts auch dann möglich sein, wenn Verpackungsbeilagen und sonstige Begleitinformationen nicht vorliegen. Dies kann nicht immer durch Form, Größe und Aussehen des Produktes alleine sichergestellt werden.

Es ist daher im Stand der Technik bereits bekannt, Produktinformationen in Form von Produktcodes, beispielsweise Zahlenfolgen oder ähnlichem, auf den Produkten, beispielsweise Windeln, anzugeben, wobei Entsprechendes aus der EP 1 292 258 B1 bekannt ist. Die Informationen lassen sich jedoch in diesem Fall nicht unmittelbar für den Anwender aus der Codierung entnehmen und darüber hinaus können in derartige Codierungen lediglich einfache Angaben eingebracht werden. Insbesondere dem Wunsch, die in einem Beipackzettel enthaltenen Informationen auch zu einem späteren Zeitpunkt verfügbar zu machen oder sogar weitere Informationen bereitzustellen, kann hierdurch nicht entsprochen werden.

Eine Codierung eines medizinischen Produktes ist aus der EP 0 828 523 B1 vorbekannt, die offenbart, eine dauerhaft identifizierende Codierung auf einem transdermalen therapeutischen System dadurch aufzubringen, dass die Codierung auf der Rückschicht in einer lokal unterschiedlichen Oberflächenbeschaffenheit, Oberflächendicke oder Oberflächenrauhigkeit dieser Rückschicht besteht.

Darüber hinaus ist es aus der WO 03/098543 A1 vorbekannt, eine Methode zum fälschungssicheren Kennzeichnen von Produkten bereitzustellen, wobei hierzu vorgesehen ist, eine individuelle Kennung und eine unverschlüsselte Kennung vorzusehen, wobei die verschlüsselte Kennung, wenn sie mittels des öffentlichen Schlüssels entschlüsselt ist, der unverschlüsselten Kennung entspricht. Die Kennung wird dabei mit einem geheimen Teil des Schlüssels erzeugt, so dass bei Übereinstimmung der beiden Kennungen nach dem Entschlüsseln des verschlüsselten Teils sichergestellt ist, dass der verschlüsselte Teil mit dem geheimen Teil des Schlüssels erzeugt wurde und dass daher der Hersteller des Originals den verschlüsselten Teil erzeugt hat und es sich somit um ein Originalprodukt handelt.

Die US 5,971,277, welches den Oberbegriff des Hauptanspruchs offenbart, beschreibt einen verbesserten Informationsgewinnungsmechanismus, wobei hier auf dem Produkt ein Barcode angeordnet ist, der auf eine URL verweist, auf der dann beispielsweise weiterführende Informationen, z. B. im medizinischen Bereich, Dosierungshinweise, Warnungen etc. enthalten sein können.

In der US 5,938,727 sowie der US 2006/0095286 A1 ist die Verwendung von zweidimensionalen Matrixcodes beschrieben.

Aus der US 2006/0180661 A1 ist eine Methode und ein System zum Feststellen der Authentizität von Produkten bekannt, um Nachbildungen zu identifizieren. Die DE 102 22 569 A1 beschreibt eine Methode zum fälschungssicheren Kennzeichen von Produkten.

Es ist nun Aufgabe der Erfindung, ein medizinisches Produkt bereitzustellen, bei dem auf einfache Weise der Benutzer weitergehende Informationen zum medizinischen Produkt erhalten kann, auch wenn keine weitergehenden Begleitinformationen, wie Beipackzettel mehr vorhanden sind. Gleichzeitig soll dabei sichergestellt werden, dass die bereitgestellten Informationen definiert das jeweilige Produkt betreffen.

Die Erfindung ist Gegenstand der Unabhängigen Ansprüche. Grundsätzlich sind heute eine Vielzahl von Codes bekannt und werden generell als Barcodes bezeichnet, wobei derartige Barcodes eine optoelektronisch lesbare Schrift darstellen, die aus verschiedenen Strichen oder Elementen und Lücken besteht. Die Begriffe "Code" und "Codierung" werden dabei synonym verwendet. Diese Codes können mit optischen Lesegeräten, wie z. B. Barcodelesegeräten (Scannern) oder CCD-Kameras, aber auch Mobiltelefone und PDAs gelesen und weiterverarbeitet werden. Sie können mit konventionellen Druckverfahren wie Offset, Flexo- oder Tiefdruck, aber auch mit Laser-, Thermodirekt-, Thermotransfer- oder Tintenstrahldruck aufgebracht werden. Man unterscheidet dabei Barcodes, deren Code nur in einer Achse aufgetragen ist, also eindimensionale Codes. Daneben werden zweidimensionale Codes verwendet, in denen der Code in zwei Achsen aufgetragen wird. Diese Codes können aus gestapelten eindimensionalen Codes bestehen, die in Zeilen angeordnet sind oder in echten Flächencodes. Schließlich existieren noch sogenannte 3D-Codes, bei denen beispielsweise der Farbton, die Farbsättigung oder die Farbhelligkeit die dritte Dimension darstellt. Dabei codieren alle zweidimensionalen Codes Informationen auch senkrecht zur Hauptausrichtung.

Dabei werden die echten Flächen- oder Matrixcodes, oder auch echte Arraycodes genannt, von den gestapelten Codes unterschieden. Bei den Matrixcodes werden die Daten innerhalb einer Matrix aus Blöcken gleichmäßig codiert. Bei echten Matrixcodes spielt die Ausrichtung praktisch keine Rolle, so dass die Lesung omnidirektional möglich ist. Dies hat insbesondere bei medizinischen Produkten, wie beispielsweise Wundauflagen oder Pflastern, den Vorteil, dass die Ablesung durch einen Benutzer vereinfacht ist und keine Richtungsangaben an dem Produkt angebracht werden müssen, die eine Ablesung ermöglichen. Diese omnidirektionale Ablesbarkeit ist bei allen Produkten von Vorteil, die keine vorgegebene Ausrichtung produktimmanent beinhalten.

Dabei ist es besonders bevorzugt, dass der zweidimensionale Matrixcode ein QR-Code ist. QR-Codes können sehr klein sein und haben eine nahezu unbegrenzte Haltbarkeit. Die Daten im QR-Code sind redundant vorhanden. Je nach Ausgestaltung können, selbst wenn bis zu 30% des Codes zerstört sind, die Daten noch entschlüsselt werden.

Vorteilhaft bei der Verwendung von QR-Codes ist, dass heutzutage bereits viele Mobiltelefone oder PDAs (Personal Digital Assistants) mit eingebauter Kamera über eine Software verfügen, welche das Lesen von QR-Codes ermöglicht. Für viele andere Geräte ist eine solche Software erhältlich. Erfindungsgemäß ist nun durch den Code eine Internet- oder Webadresse codiert. Da heutzutage die meisten Mobiltelefone oder PDAs neben einer Kamera einen Webbrowser enthalten, kann der Code z. B. mit dem Mobiltelefon gelesen werden und wird von der Software automatisch auf die entsprechend verschlüsselte Internetseite geleitet. Dieser Internetseite können dann unmittelbar die spezifischen für das Produkt relevanten Informationen entnommen werden, wobei ein Suchen auf der Homepage des Herstellers oder gegebenenfalls sogar allgemein im Internet, um zunächst die Herstellerdaten zu erhalten, vermieden werden kann.

Darüber hinaus können auch weitere Informationen in der Codierung enthalten sein. Diese weiteren Informationen sind dann in einem zweiten zweidimensionalen Matrixcode enthalten. Beipielsweise kann mit dem ersten zweidimensionalen Matrixcode der einheitliche Quellenanzeiger (URL) der Internetseite angegeben sein, die anwendungsspezifische und/oder technische Daten zum medizinischen Produkt enthält, und mit einem zweiten zweidimensionalen Matrixcode eine Telefonnummer angegeben sein, die eine direkte Verbindung zu einer Beratungsstelle für das medizinische Produkt herstellt. Diese Telefonnummer kann dann unmittelbar im Mobiltelefon oder im PDA weiterverarbeitet werden und so auch gegebenenfalls eine Kontaktaufnahme mit einer Hotline oder ähnlichem ermöglichen, beispielsweise um weitere Informationen z. B. hinsichtlich Nebenwirkungen des Produktes auch dann zu erhalten, wenn aus bestimmten Gründen eine Verbindung mit der Internetseite, die in der Codierung verschlüsselt ist, nicht hergestellt werden kann oder das Lesen der Daten beispielsweise auf dem Display eines Mobiltelefons als zu unkomfortabel empfunden wird oder ein direktes Gespräch mit einer beratenden Person gewünscht ist. Gemäß einem weiterführenden Gedanken der vorliegenden Erfindung ist damit auch ein medizinisches Produkt Gegenstand der vorliegenden Erfindung, das mindestens zwei zweidimensionale Matrixcodes, insbesondere zwei QR-Codes umfasst, wobei der erste Matrixcode einen einheitlichen Quellenanzeiger einer Internetseite angibt, die anwendungsspezifische und/oder technische Daten zum medizinischen Produkt enthält und der zweite Matrixcode eine Telefonnummer, die eine direkte Verbindung zu einer Beratungsstelle für das medizinische Produkt herstellt.

Anstelle eines QR-Codes können jedoch als Codierung auch sogenannte Data-Matrix-Codes, Maxi-Codes, Aztec-Codes oder Dot-Codes/Punkt-Codes verwendet werden.

Dabei bietet der QR-Code den Vorteil, dass die Software zur Entschlüsselung des Codes heutzutage weit verbreitet ist und insbesondere frei erhalten werden kann, so dass der Zugang zu den relevanten Daten für annähernd jeden Benutzer möglich ist.

Es kann dabei vorgesehen sein, dass der Quick-Response-Code oder QR-Code, der quadratisch ist und drei Suchhilfen aufweist, die als ineinandergeschachtelte helle und dunkle Quadrate in drei Ecken leicht zu erkennen sind, Symbolelemente aufweist, die als Quadrate ausgestaltet sind. Erfindungsgemäß können 21 x 21 bis einschließlich 75 x 75 Quadrate, insbesondere 21 x 21 bis einschließlich 53 x 53 Quadrate und insbesondere 21 x 21 Quadrate bis einschließlich 45 x 45 Quadrate vorgesehen sein.

Der Code kann insbesondere eine Fläche von mindestens 0,5 cm² und höchstens 20 cm² einnehmen. Hierdurch kann er auf annähernd sämtlichen relevanten medizinischen Produkten angebracht werden, ohne deren Verwendbarkeit und Optik zu stören, und ist doch gleichermaßen noch gut durch den Benutzer und Anwender aufzufinden und zu erkennen. Insbesondere kann der Code zwischen 1 cm² und 15 cm² und ganz bevorzugt zwischen 1 cm² und 9 cm² groß sein.

Es kann dabei vorgesehen sein, dass eine der Fehlerkorrekturlevels Anwendung findet, die eine Rekonstruktion eines beschädigten Codes von 7% bis zu 30% zulassen. D. h., bis zu 7% oder sogar bis zu 30% des Codes können nicht mehr lesbar sein und dennoch können die Informationen dem Code entnommen werden.

Besonders bevorzugt ist vorgesehen, dass die anwendungsspezifischen und/oder technischen Informationen die inhaltliche Wiedergabe des Packungsbeilegers, des Beipackzettels oder die Gebrauchsanweisung gemäß Medizinprodukt-Richtlinie des medizinischen Produkts sind. Auf diese Weise kann sichergestellt werden, dass sämtliche in diesen Informationen enthaltenen Angaben auch nach Trennung des eigentlichen medizinischen Produkts von dem Packungsbeileger bzw. dem Beipackzettel oder der Gebrauchsanweisung für den Benutzer zu jedem späteren Zeitpunkt, gegebenenfalls sogar noch nach Anwendung des Produktes, verfügbar sind. So kann beispielsweise bei einem Pflaster, das einige Zeit auf der Haut eines Patienten getragen wurde, wobei der Patient z. B. nach Entfernen des Pflasters Hautreaktionen feststellen konnte, mittels des Codes eine Verfügbarkeit der Informationen zu dem Pflaster bereitgestellt werden, aus denen dann mögliche Nebenwirkungen, aber auch Informationen, wie beispielsweise, ob es sich um ein Pflaster für sensitive Hauttypen handelt, entnehmbar sind.

Besonders bevorzugt ist es dabei, dass die Internetseite die Informationen oder Daten in der Landessprache wiedergibt, in der das Produkt verkauft wurde. Diese Information kann zusätzlich als weitere Information in den Code eingebracht werden, so dass der Anwender unmittelbar auf die Internetseite in der entsprechenden Landessprache weitergeleitet wird.

Dabei kann vorgesehen sein, dass die Trägerschicht aus einem Gewebe, Gewirke, Gestrick, einem Vliesstoff, einem Film oder Kombinationen hiervon besteht. Der Code kann direkt auf die Trägerschicht aufgebracht, insbesondere auf die Trägerschicht direkt aufgedruckt sein, wobei alle bekannten Druckverfahren eingesetzt werden können. Alternativ kann der Code auch mittelbar auf die Trägerschicht aufgebracht sein, beispielsweise über eine weitere Schicht, die auf der Trägerschicht z. B. partiell angeordnet ist. Diese weitere Schicht kann beispielsweise ein Label, Klebeetikett oder Ähnliches sein, das dauerhaft auf der Trägerschicht angebracht ist. Alternativ kann auch eine Beschichtung auf der Trägerschicht aufgebracht sein, auf die dann der Code aufgedruckt werden kann. Neben der Trägerschicht können weitere Schichten vorgesehen sein, insbesondere absorbierende Schichten sowie dem Träger des medizinischen Produkts zugewandte Schichten. Die Anzahl der Schichten ist hierbei nicht begrenzt.

Besonders bevorzugt kann vorgesehen sein, dass der Code mit einer transparenten Beschichtung, insbesondere einer nicht reflektierenden transparenten Beschichtung abgedeckt ist. Auf diese Weise kann der Code während der Benutzung des medizinischen Produkts geschützt sein und wird beispielsweise vor Abrieb, aber auch vor Zutritt durch Flüssigkeit bewahrt. Die Beschichtung kann nach Aufbringen des Codes zumindest in dessen Bereich aufgebracht werden.

Besonders bevorzugt handelt es sich bei dem medizinischen Produkt um ein steriles medizinisches Produkt. Es ist vorgesehen, dass der Code einen Farbindikator umfasst, der während eines Sterilisationsprozesses seine Farbe ändert, wobei besonders bevorzugt die Farbe nach der Sterilisation im Wellenlängenbereich zwischen 400 und 800 nm ein Absorptionsmaximum aufweist. Dabei kann der Farbumschlag so gestaltet werden, dass lediglich bei korrekt durchgeführter Sterilisation ein Farbumschlag erfolgt, so dass der Code gleichzeitig als Farbanzeiger für korrekt sterilisierte Produkte Verwendung finden kann. Auf diese Weise kann der Code neben der darin codierten Information weitere unmittelbar sichtbare Informationen für den Anwender bereitstellen. Dabei ist es besonders bevorzugt, wenn der Code nach der Sterilisation im sichtbaren Bereich ein Absorptionsmaximum aufweist, da dies eine besonders einfache Erkennbarkeit ermöglicht. So kann beispielsweise vorgesehen sein, dass der Code durch die Sterilisation überhaupt erst für den Menschen sichtbar wird. Der Vorteil liegt dabei darin, dass zur Erkennung keine weiteren technischen Geräte notwendig sind und anders als bei einem Farbumschlag im sichtbaren Bereich die Merkleistung für den Anwender verringert werden kann. Schlägt beispielsweise die Farbe des Codes im sichtbaren Bereich z. B. von Rot nach Grün um, so muss sich der Benutzer merken, was Rot bedeutet, nämlich nicht sterilisiert, und Grün, nämlich sterilisiert. Dies mag bei derartig eindeutigen und auch in weiteren Bereichen des Lebens verankerten Farben noch vergleichsweise einfach erscheinen. Schwieriger wird es jedoch schon bei einem Farbumschlag von Blau nach Grün. Ändert sich hingegen die Farbe dahingehend, dass der Code überhaupt erst sichtbar wird, ist hier die Erkennung, dass eine Sterilisation erfolgreich stattgefunden hat, weiter vereinfacht.

Darüber hinaus umfasst die Erfindung ein Set umfassend mindestens ein medizinisches Produkt gemäß der vorstehend beschriebenen Art und ein Decodiergerät zur Decodierung des Codes und zur Herstellung der Verbindung mit dem Internet und damit zur Weiterleitung auf die Internetseite.

Dabei kann das medizinische Produkt insbesondere in einer Verpackung vorliegen.

Als Decodiergerät kann vorzugsweise ein Mobiltelefon oder PDA eingesetzt werden, das eine Einrichtung zur Aufnahme von Bildern, insbesondere eine Kamera, sowie eine Entschlüsselungs- und Übermittlungssoftware für den Code umfasst. D. h., das Mobiltelefon oder auch, sofern als Decodiergerät ein PDA eingesetzt wird, das PDA benötigt eine Software zum Lesen derartiger, vorzugsweise QR-Codes sowie eine Software, mit der eine Verbindung ins Internet hergestellt werden kann, insbesondere einen Webbrowser.

Des Weiteren umfasst die Erfindung eine Verwendung eines echten Matrix-Codes (Array-Codes), insbesondere eines Quick-Response-Codes (QR-Codes), zur Verschlüsselung eines einheitlichen Quellenanzeigers (engl.: Uniform Resource Locator (URL)) einer Internetseite, die anwendungsspezifische Informationen und/oder technische Daten eines medizinischen Produktes bereitstellt, auf der Außenseite eines medizinischen Produktes. Dabei kann die anwendungsspezifische Information, insbesondere die inhaltliche Wiedergabe des Packungsbeilegers, des Beipackzettels oder der Gebrauchsanweisung, gemäß Medizinprodukte-Richtlinie des medizinischen Produktes ausgebildet sein.

Derartige Codes können insbesondere auf Medizinprodukten gemäß Richtlinie 93/42 EWG des Rates vom 14.06.1993 oder dessen Aktualisierung aufgebracht sein. Derartige Codes können also insbesondere auf Windeln, Inkontinenzeinlagen, aber auch auf Krankenunterlagen, Wundauflagen, Kompressen, Pflastern, Binden und Bandagen, Kompressionsbinden, Fixierbinden, Abdeckungen für Patienten oder auf Geräten eines Operationssaales sowie auf Bekleidung während der Operation, wie Operationskitteln, Kopfhauben oder Handschuhen, aufgebracht sein. Unabhängig hiervon, können derartige Codes aber auch auf Arzneimitteln aufgebracht sein.

Weitere Vorteile und Merkmale der Erfindung ergeben sich aus den übrigen Anmeldungsunterlagen. Die Erfindung wird im Folgenden anhand einer Zeichnung näher erläutert. Dabei zeigt:
Figur 1 eine an einem Träger angebrachte Windel,
Figur 2 zwei QR-Codes und
Figur 3a und 3b eine Wundauflage.

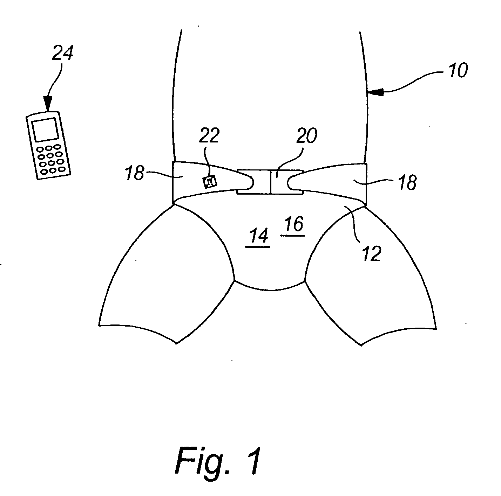

Figur 1 zeigt eine an einem Träger bzw. einer Person 10 angebrachte Windel 12 umfassend eine Trägerschicht 14, wobei eine oberflächenbildende Seite der Trägerschicht, die mit 16 bezeichnet ist, eine Außenseite des medizinischen Produktes, nämlich der Windel 12 bildet. Dabei umfasst das medizinische Produkt 12 weitere Schichten, insbesondere eine dem Träger 10 zugewandte Innenschicht, die nicht dargestellt ist, sowie weitere zwischen der Innen- und der Trägerschicht 14 angeordnete Schichten, wie insbesondere einen Saugkörper, der ebenfalls nicht zu sehen ist. Die Windel ist dabei mit zwei Verschlusselementen 18, die am hinteren Taillenbereich der Windel 12 angebracht sind und im vorderen Taillenbereich auf einem weiteren Befestigungselement 20 festgelegt werden können, am Träger 10 befestigt. Es handelt sich dabei im Wesentlichen um eine bezüglich des Aufbaus herkömmliche Windel.

Im Bereich eines der Befestigungselemente 18 ist von außen sichtbar auf die Trägerschicht 14 und dort auf deren Außenseite 16 ein Code 22 aufgedruckt, wobei es sich bei dem Code 22 um einen sogenannten QR-Code handelt.

Wünscht nun, insbesondere auch nach Entnehmen der Windel 12 aus der Verpackung, der Kunde (Träger oder eine dritte Person) weitere Informationen zu dem medizinischen Produkt zu erhalten, so kann er den Code 22 mittels beispielsweise seines PDA oder seines Mobiltelefons einlesen, wobei derartige Geräte, wie Mobiltelefone und PDAs, wobei das Mobiltelefon in Figur 1 mit dem Bezugszeichen 24 versehen ist, über eine Kamera verfügen muss sowie über eine Software, die die Decodierung derartiger QR-Codes ermöglicht.

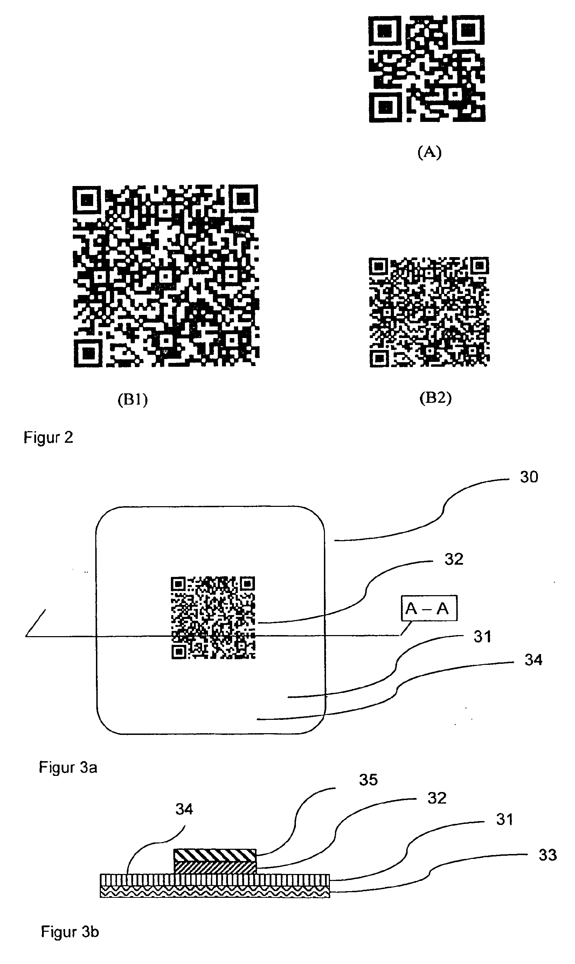

Möchte nun der Nutzer oder eine weitere Person Informationen zur Windel 12 erhalten, beispielsweise zum Material einer der Schichten, aber auch zur Frage, für welche Körpergröße oder für welchen Anwendungsfall derartige Windeln 12 eingesetzt werden können etc., so kann er mittels des Mobiltelefons 24 den Code 22 einlesen und entschlüsseln, wobei die auf dem Mobiltelefon 24 vorgesehene Software ihn unmittelbar mit der entsprechenden Internetseite des Herstellers in der Sprache des Landes, in der das Produkt erworben wurde, verbindet. Figur 2 zeigt nun in Darstellung (A) einen ersten Quick-Response-Code, der 3 x 3 cm, also 9 cm² groß ist und der die Information http://www.hartmann.info, also den Hinweis auf die Homepage des Herstellers des Produktes, verschlüsselt enthält. Der Code weist dabei als Symbolelemente 25 x 25 gleichgroße Quadrate auf, wobei sowohl die weißen als auch die schwarzen Quadrate zu zählen sind.

Besonders bevorzugt ist es jedoch vorgesehen, dass der Benutzer unmittelbar mit der entsprechenden das Produkt betreffenden Seite verbunden wird. Darstellung (B1) zeigt einen entsprechenden alternativen QR-Code, der die Information
http://produktkatalog.hartmann.info/PHb2c/catalog/Z_set CurrentArea.doZ_area1D=3EC01F992482E056E10000000A808F21
beinhaltet, die unmittelbar auf eine entsprechende Produktseite hinweist. Dieser Produktseite kann der den Code einlesende Benutzer dann unmittelbar technische oder anwendungsspezifische Informationen zu einem medizinischen Produkt 12 entnehmen. Der Code weist dabei als Symbolelemente 45 x 45 gleichgroße Quadrate auf, wobei sowohl die weißen als auch die schwarzen Quadrate zu zählen sind.

Mit Darstellung (B2) ist derselbe Code, der mit Darstellung (B1) gezeigt ist in verkleinerter Form wiedergegeben (3 x 3 cm).

Auf diese Weise kann erreicht werden, dass auch, nachdem ein Produkt vom Beipackzettel sowie weiteren Informationen und insbesondere auch der Verpackung getrennt wurde, insbesondere weil das Produkt bereits verwendet wird, jederzeit die entsprechenden Informationen erhalten werden können, selbst wenn der Benutzer und die Informationen Wünschende nicht weiß, wer der Hersteller des Produktes ist.

Auf diese Weise kann die Sicherheit und Bequemlichkeit von medizinischen Produkten weiter erhöht werden.

Figur 3a (Aufsicht) und 3b (Querschnitt A-A) zeigt nun eine Wundauflage (30), die auf einer Außenseite (34) einer Trägerschicht (31) einen dauerhaft angebrachten QR-Code (32) aufweist. Der QR-Code ist mittels eines Thermotransferdruckverfahrens direkt auf die Trägerschicht aufgedruckt. Der QR-Code gibt verschlüsselt den einheitlichen Quellenanzeiger (URL) der Internetadresse an, http://fr.hartmann.info/FR/Accueil/Produits/Soins blank des blank plaies/article 64088.html, die anwendungsspezifische Informationen und technische Daten zu dem Produkt in der Landessprache wiedergibt, in der das Produkt verkauft wurde. Der Code weist dabei als Symbolelemente 41 x 41 gleichgroße Quadrate auf. Die Wundauflage besteht aus einer Trägerschicht aus einem wasserdampfdurchlässigen Polyurethanfilm, der vollständig mit einem Haftklebstoff (33) aus einem Polyacrylat-Polymer beschichtet ist. Der QR-Code ist zum Schutz und zur besseren Haltbarkeit mit einer transparenten Beschichtung (35) aus einem Polyurethan abgedeckt.

## Patentansprüche

1. Medizinisches Produkt (12, 30) mit einer Trägerschicht (14, 31), wobei eine der beiden oberflächenbildenden Seiten der Trägerschicht (14, 31) eine Außenseite (16, 34) des medizinischen Produkts (12) bildet, wobei auf der Seite, die die Außenseite (16, 34) bildet, ein Code (22, 32), der einen einheitlichen Quellenanzeiger einer Internetseite angibt, die anwendungsspezifische informationen und/oder technische Daten zum medizinischen Produkt (12, 30) enthält, dauerhaft angebracht ist, **dadurch gekennzeichnet, dass** der Code (22, 32) ein zweidimensionaler Matrixcode ist und der Code (22, 30) einen Farbindikator umfasst, der während eines Sterilisationsprozesses seine Farbe ändert, wobei die Farbe nach der Sterilisation im Wellenlängenbereich bevorzugt zwischen 400 nm und 800 nm ein Absorptionsmaximum aufweist.

2. Medizinisches Produkt nach Anspruch 1, **dadurch gekennzeichnet, dass** der zweidimensionale Matrixcode ein Quick-Response-Code ist.

3. Medizinisches Produkt nach Anspruch 2, **dadurch gekennzeichnet, dass** der Quick-Response-Code als Symbolelemente von 21 x 21 Quadrate bis einschließlich 75 x 75 Quadrate, insbesondere 21 x 21 Quadrate bis einschließlich 53 x 53 Quadrate und insbesondere 21 x 21 Quadrate bis einschließlich 45 x 45 Quadrate umfasst.

4. Medizinisches Produkt nach mindestens einem der vorgenannten Ansprüche, **dadurch gekennzeichnet, dass** der Code (22, 32) eine Fläche von mindestens 0,5 cm² und höchstens 20 cm², insbesondere mindestens 1 cm² und höchstens 15 cm² und ganz besonders bevorzugt mindestens 1 cm² und höchstens 9 cm² aufweist.

5. Medizinisches Produkt nach mindestens einem der vorgenannten Ansprüche, **dadurch gekennzeichnet, dass** die anwendungsspezifischen Informationen die inhaltliche Wiedergabe des Packungsbeilegers, des Beipackzettels oder die Gebrauchsanweisung gemäß Medizinprodukt-Richtlinie des medizinischen Produktes (12, 30) sind.

6. Medizinisches Produkt nach mindestens einem der vorgenannten Ansprüche, **dadurch gekennzeichnet, dass** die Internetseite die Informationen oder Daten in der Sprache des Landes wiedergibt, in der das medizinische Produkt (30) verkauft wurde, wobei die Spruche als weitere Information in den Code eingebracht ist.

7. Medizinisches Produkt nach mindestens einem der vorgenannten Ansprüche, **dadurch gekennzeichnet, dass** die Trägerschicht (14, 31) aus einem Gewebe, Gewirke, Gestrick, Vliesstoff, einem Film oder Kombinationen hiervon besteht.

8. Medizinisches Produkt nach mindestens einem der vorgenannten Ansprüche, **dadurch gekennzeichnet, dass** der Code (22, 32) direkt auf die Trägerschicht (14, 31) aufgebracht, insbesondere direkt auf die Trägerschicht (14, 31) aufgedruckt ist.

9. Medizinisches Produkt nach mindestens einem der vorgenannten Ansprüche, **dadurch gekennzeichnet, dass** der Code (22, 32) mit einer transparenten und insbesondere nichtreflektierenden Beschichtung (35) abgedeckt ist.

10. Medizinisches Produkt nach mindestens einem der vorgenannten Ansprüche, **dadurch gekennzeichnet, dass** das medizinische Produkt (12, 30) eine Windel, eine Inkontinenzeinlage, eine Krankenunterlage, eine Wundauflage, eine Kompresse, ein Pflaster, eine Binde, eine Kompressionsbinde, eine Fixierbinde, eine Abdeckung für einen Patienten oder ein Gerät eines Operationssaales, oder ein Mantel zur Verwendung während einer Operation ist, insbesondere ist das medizinische Produkt (12, 30) ein steriles medizinisches Produkt.

11. Set umfassend mindestens ein medizinisches Produkt gemäß mindestens einem der vorgenannten Ansprüche, das insbesondere in einer Verpackung vorliegt, und ein Decodiergerät (24) zur Decodierung des Codes (22) und zur Herstellung der Verbindung mit einer Internetseite.

12. Set nach Anspruch 11 **dadurch gekennzeichnet, dass** das Decodiergerät (24) ein Mobiltelefon ist, wobei das Mobiltelefon eine Einrichtung zur Aufnahme von Bildern sowie eine Entschlüsselungs- und Übermittlungssoftware für den Code (22) umfasst.

13. Verwendung eines zweidimensionalen Matrix-Codes (22), insbesondere eines Quick-Response-Code, zur Verschlüsselung eines einheitlichen Quellenanzeigers einer Internetseite, die anwendungsspezifische Informationen und/oder technische Daten eines medizinischen Produktes (12, 30) bereitstellt, wobei das medizinische Produkt (12, 30) insbesondere eine Windel, eine Inkontinenzeinlage, eine Krankenunterlage, eine Wundauflage, eine Kompresse, ein Pflaster, eine Binde, eine Kompressionsbinde, eine Fixierbinde, eine Abdeckung für einen Patienten oder ein Gerät eines Operationssaales, oder ein Mantel zur Verwendung während einer Operation ist und wobei der Code (22, 30) einen Farbindikator umfasst, der während eines Sterilisationsprozesses seine Farbe ändert, wobei die Farbe nach der Sterilisation im Wellenlängenbereich bevorzugt zwischen 400 nm und 800 nm ein Absorptionsmaximum aufweist.

14. Verwendung nach Anspruch 13 **dadurch gekennzeichnet, dass** die anwendungsspezifischen Informationen die inhaltliche Wiedergabe des Packungsbeilegers, des Beipackzettels oder der Gebrauchsanweisung gemäß Medizinprodukt-Richtlinie des medizinischen Produktes sind.

## Claims

1. Medical product (12, 30) with a carrier layer (14, 31), with one of the two surface-forming sides of the carrier layer (14, 31) forming an outside (16, 34) of the medical product (12), wherein a code (22, 32) providing a uniform resource locator of an internet site containing usage-specific information and/or technical data relating to the medical product (12, 30) is permanently attached to the side forming the outside (16, 34), **characterized in that** the code (22, 32) is a two-dimensional matrix code, and that the code (22, 30) comprises a color indicator changing color during a sterilization process, wherein the color is showing an absorption maximum within the wave length range preferably between 400 nm and 800 nm following sterilization.

2. Medical Product according to claim 1, **characterized in that** the two-dimensional matrix code is a quick response code.

3. Medical product according to claim 2, **characterized in that** the quick response code comprises as symbolic elements from 21 x 21 squares up to inclusively 75 x 75 squares, in particular 21 x 21 squares up to inclusively 53 x 53 squares, and in particular, 21 x 21 squares up to inclusively 45 x 45 squares.

4. Medical product according to at least one of the preceding claims, **characterized in that** the code (22, 32) has a minimum surface area of 0.5 cm² and a maximum of 20 cm², in particular a minimum of 1 cm², and a maximum of 15 cm², and particularly preferred, a minimum of 1 cm², and a maximum of 9 cm².

5. Medical product according to at least one of the preceding claims, **characterized in that** the usage-specific information is a content duplication of the package information, the package insert or the usage directions pursuant to the medical product guidelines of the medical product.

6. Medical product according to at least one of the preceding claims, **characterized in that** the internet site provides the information or the data in the language of the country where the medical product (30) was sold, wherein the language is added to the code as additional information.

7. Medical product according to at least one of the preceding claims, **characterized in that** the carrier layer (14, 31) consists of woven fabric, interlaced fabric, knit fabric, nonwoven fabric, a film, or a combination thereof.

8. Medical product according to at least one of the preceding claims, **characterized in that** the code (22, 32) is applied directly to the carrier layer (14, 31), in particular imprinted directly onto the carrier layer (14, 31).

9. Medical product according to at least one of the preceding claims, **characterized in that** the code (22, 32) is covered with a transparent, and in particular non-reflective coating (35).

10. Medical product according to at least one of the preceding claims, **characterized in that** the medical product (12, 30) is a diaper, an incontinence pad, a disposable sheet, a wound dressing, a compress, a band-aid, a bandage, a compression bandage, a fixation bandage, a cover sheet for a patient or a device of an operating room, or a gown for the use during surgery, in particular the medical product (12, 30) is a sterile medical product.

11. Set comprising at least one medical product according to at least one of the preceding claims, located in particular in a packaging, and a decoding device (24) for decoding the code (22), and for establishing the connection with the internet site.

12. Set according to claim 11, **characterized in that** the decoding device (24) is a mobile phone, the mobile phone comprising a device for taking pictures and decoding and transmitting software for the code (22).

13. Use of a two-dimensional matrix code (22), in particular of a quick response code for the encoding of a uniform resource locator of an internet site providing usage-specific information, and/or technical data for a medical product (12, 30), wherein the medical product (12, 30) is in particular a diaper, an incontinence pad, a disposable sheet, a wound dressing, a compress, a band-aid, a bandage, a compression bandage, a fixation bandage, a cover sheet for a patient or a device of an operating room, or a gown for the use during surgery and wherein the code (22, 30) comprises a color indicator changing color during a sterilization process, wherein the color is showing an absorption maximum within the wave length range preferably between 400 nm and 800 nm following sterilization.

14. Use according to claim 13, **characterized in that** the usage-specific information is a content duplication of the package information, the package insert or the usage directions pursuant to the medical product guideline of the medical product.

## Revendications

1. Produit médical (12, 30) comprenant une couche support (14, 31), dans lequel l'un des deux côtés de la couche support (14, 31) forme un côté extérieur (16, 34) du produit médical (12), dans lequel il est appliqué de manière durable sur le côté formant le côté extérieur (16, 34) un code (22, 32) qui indique un localisateur uniforme de ressource d'une page Internet, laquelle contient des informations spécifiques d'utilisation et/ou des données techniques relatives au produit médical (12, 30), **caractérisé en ce que** le code (22, 32) est un code matriciel à deux dimensions et **en ce que** le code (22, 30) comprend un indicateur coloré qui change de couleur pendant un processus de stérilisation, la couleur présentant après la stérilisation, au niveau des longueurs d'onde, un maximum d'absorption compris de préférence entre 400 nm et 800 nm.

2. Produit médical selon la revendication 1, **caractérisé en ce que** le code matriciel à deux dimensions est un code à réponse rapide (Quick-Response-Code).

3. Produit médical selon la revendication 2, **caractérisé en ce que** le code à réponse rapide comprend comme éléments symbole des carrés allant de 21 x 21 jusqu'à 75 x 75, en particulier des carrés de 21 x 21 jusqu'à 53 x 53, et en particulier des carrés de 21 x 21 jusqu'à 45 x 45.

4. Produit médical selon au moins l'une des revendications précédentes, **caractérisé en ce que** le code (22, 32) présente une surface d'au moins 0,5 cm² et au maximum de 20 cm², en particulier d'au moins 1 cm² et au maximum de 15 cm² et de façon particulièrement préférée d'au moins 1 cm² et au maximum de 9 cm².

5. Produit médical selon au moins l'une des revendications précédentes, **caractérisé en ce que** les informations spécifiques d'utilisation sont la reproduction de ce qui figure sur l'emballage, sur l'étiquette explicative ou sur la notice d'utilisation conformément à la directive sur les produits médicaux du produit médical (12, 30).

6. Produit médical selon au moins l'une des revendications précédentes, **caractérisé en ce que** la page Internet restitue les informations ou les données dans la langue du pays dans lequel le produit médical (30) a été vendu, la langue étant introduite dans le code en tant qu'information supplémentaire.

7. Produit médical selon au moins l'une des revendications précédentes, **caractérisé en ce que** la couche support (14, 31) est composée d'un tissu, d'un maillage, d'un tricotage, d'un non-tissé, d'un film ou de combinaisons de ces derniers.

8. Produit médical selon au moins l'une des revendications précédentes, **caractérisé en ce que** le code (22, 32) est appliqué directement sur la couche support (14, 31), en particulier apposé par pression directement sur la couche support (14, 31).

9. Produit médical selon au moins l'une des revendications précédentes, **caractérisé en ce que** le code (22, 32) est recouvert d'un revêtement (35) transparent et en particulier non réfléchissant.

10. Produit médical selon au moins l'une des revendications précédentes, **caractérisé en ce que** le produit médical (12, 30) est une couche, un dispositif pour personnes incontinentes, une alèse, un pansement, une compresse, un pansement adhésif, une bande, une bande de compression, une bande cohésive, une couverture pour un patient ou un appareil d'une salle d'opération, ou bien encore une blouse destinée à être utilisée pendant une opération, le produit médical (12, 30) étant en particulier un produit médical stérile.

11. Ensemble comprenant au moins un produit médical selon au moins l'une des revendications précédentes, présenté en particulier dans un emballage, et un appareil de décodage (24) pour décoder le code (22) et établir la liaison avec une page Internet.

12. Ensemble selon la revendication 11 **caractérisé en ce que** l'appareil de décodage (24) est un téléphone mobile, le téléphone mobile comprenant un dispositif pour recevoir des photos ainsi qu'un logiciel de décodage et de transmission pour le code (22).

13. Utilisation d'un code matriciel à deux dimensions (22), en particulier d'un code à réponse rapide (Quick-Response-Code) pour coder un localisateur uniforme de ressource d'une page Internet qui met à disposition les informations spécifiques d'utilisation et/ou les données techniques d'un produit médical (12, 30), le produit médical (12, 30) étant en particulier une couche, un dispositif pour personnes incontinentes, une alèse, un pansement, une compresse, un pansement adhésif, une bande, une bande de compression, une bande cohésive, une couverture pour un patient ou un appareil d'une salle d'opération, ou bien encore une blouse destinée à être utilisée pendant une opération, et le code (22, 30) comprenant un indicateur coloré qui change de couleur pendant un processus de stérilisation, la couleur présentant après la stérilisation, au niveau des longueurs d'onde, un maximum d'absorption compris de préférence entre 400 nm et 800 nm.

14. Utilisation selon la revendication 13, **caractérisée en ce que** les informations spécifiques d'utilisation sont la reproduction de ce qui figure sur l'emballage, sur l'étiquette explicative ou sur la notice d'utilisation conformément à la directive sur les produits médicaux du produit médical.
